# EUROPEAN PATENT APPLICATION

(11) **EP 2 063 660 A1**
(43) Date of publication of application: **27.05.2009**
(21) Application number: 07801042.8
(22) Date of filing: 05.09.2007
(51) Int. Cl.: H04Q 7/38, H04Q 7/20, H04L 12/24, H04B 1/74

(54) **THE METHOD, SYSTEM AND MOBILE SWITCH CENTER FOR LOAD TRANSFERRING IN THE POOL AREA**

(30) Priority: 05.09.2006 CN 200610127124
(71) Applicant: Huawei Technologies Co., Ltd., Longgang District, Shenzhen Guangdong 518129 (CN)
(72) Inventor: WU, Xiaoming, Shenzhen Guangdong 518129 (CN); YE, Sihai, Shenzhen Guangdong 518129 (CN); CUI, Xiaochun, Shenzhen Guangdong 518129 (CN)
(74) Representative: Körber, Martin Hans
(86) International application number: PCT/CN2007/070633
(87) International publication number: WO 2008/028426

(57) **Abstract**

The present invention provides a method for implementing load migration in a pool area, including: after receiving a service request from the MS, the source MSC notifies the MS to initiate location update again, and sends the destination MSC information to the MS; after receiving the notification, the MS initiates location update again, and migrates the traffic to the destination MSC corresponding to the destination MSC information. The present invention also provides a system and an MSC for implementing load migration in a pool area. Through the technical solution provided in an embodiment of the present invention, the load is migrated flexibly in the pool area; the users on an MSC in the MSC pool can be migrated to the specified MSC without changing the RAN in the existing network, thus reducing the work of operation and maintenance and improving the satisfaction of the operator.

## Description

### FIELD OF THE INVENTION

The present invention relates to the field of mobile communication technologies, and in particular, to a method, a system and a Mobile Switching Center (MSC) for migrating load in a pool area.

### BACKGROUND

Due to the limitation of air interface rates imposed on the Global System for Mobile Communications (GSM), people are more and more interested in the 3^{rd} Generation (3G) mobile communication system, which gives rise to various 3G standards, for example, 3GPP R99, 3GPP R4 and 3GPP R5 developed by the 3^{rd} Generation Partnership Project (3GPP).

The multi-Iu interface (Iu-Flex) technology is a technology stipulated in the 3GPP R5, and supports the in-domain connection routing function from one Base Station Control (BSC)/Radio Network Controller (RNC) node to more than one Core Network (CN) node. Such a routing function is implemented through Network Resource Indicator (NRI). When a Mobile Station (MS) performs location update or user access, the Radio Access Network (RAN) selects an MSC or a Service GPRS Supporting Node (SGSN) according to the NRI information carried in the Temporary Mobile Subscriber Identity (TMSI)/Packet TMSI (P-TMSI), and routes the received message to the selected CN node for processing.

The concept of pool area is introduced into the Iu-Flex technology. From the perspective of the RAN, a pool area includes service areas of one or more BSCs/RNCs served by a group of parallel CN nodes. The MS moves in this area without the need of changing the serving CN node. Multiple CN nodes in a pool area may share load. The services provided by them cover the whole pool area, thus reducing update, handover and relocation of nodes between CNs and decreasing the update traffic of the Home Location Register (HLR).

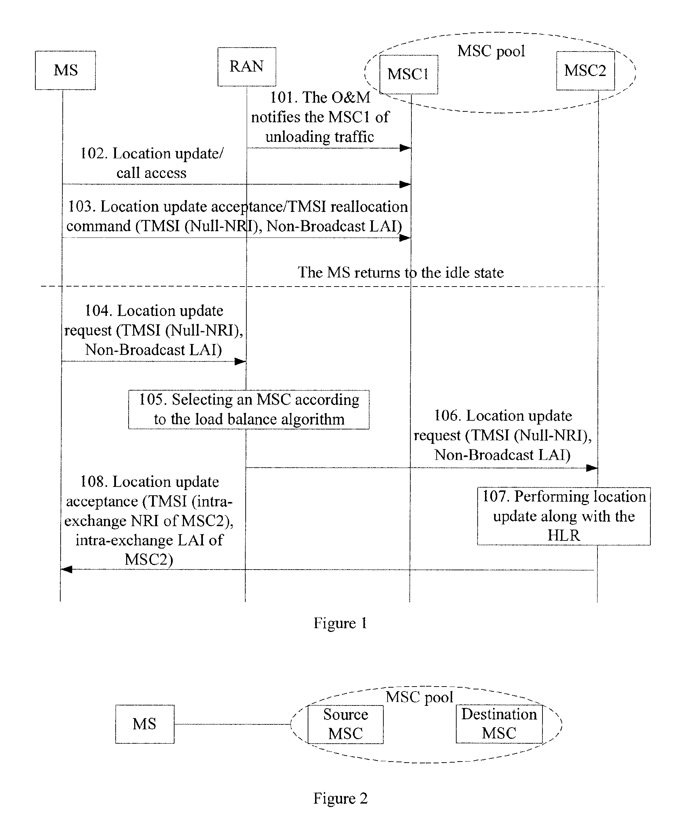

When an MSC (supposing MSC1) in an MSC pool needs to be updated or incurs load exception, the load needs to be reallocated, and the users of MSC1 need to be migrated to other MSCs in the MSC pool area in order to release the load of the MSC1. As shown in Figure 1, a specific load migration process comprises the following steps:

Step 101: The Operation & Maintenance (O&M) system notifies the MSC1 to unload traffic.

Step 102: An MS initiates a location update or a call access to the MSC1.

Step 103: If the MS initiates location update, the MSC1 returns a location update acceptance message to the MS, and the message carries the TMSI of the specific NRI (null-NRI) and the intra-exchange non-broadcast Location Area Identifier (LAI) of MSC1.

If the MS initiates a call access, the MSC1 performs a TMSI reallocation process, and returns a TMSI reallocation command to the MS. The TMSI reallocation command carries a TMSI of null-NRI and a non-broadcast LAI.

Step 104: When the MS detects that the LAI in the system information broadcast is different from the received non-broadcast LAI in the idle state, the MS initiates location update again, and sends to the RAN a location update request that carries a TMSI of null-NRI and a non-broadcast LAI.

Step 105: After receiving the location update request from the MS, the RAN finds out that the exported NRI is null-NRI, and reselects a new serving MSC (e.g., MSC2 in Figure 1) for the MS through the load balance algorithm, and the MSC whose traffic is unloaded (i.e., MSC1) is not a candidate.

Step 106: The RAN sends the received location update request to the MSC2.

Step 107: After receiving the location update request, the MSC2 performs location update along with the HLR.

Step 108: The MSC2 reallocates a TMSI for the MS, and sends back to the MS a location update acceptance message that carries the reallocated TMSI and the intra-exchange LAI of the MSC2. The reallocated TMSI carries the intra-exchange NRI of the MSC2.

The whole migration process is finished.

As described above, in the load migration process, the users unloaded off the MSC are migrated to other MSCs in the pool in the load sharing mode. It is difficult to determine the MSC to which the migrated users are finally attached. Further, after the MSC is upgraded, it is troublesome to migrate the users back to the original MSC. Furthermore, in the practical application, sometimes the users in a pool need to be migrated to an idle MSC or a specified MSC, which is, however, impracticable in the prior art. That is, the method for migrating load in the MSC pool in the prior art is not flexible enough, and is unable to satisfy the operator.

### SUMMARY

The objectives of the present invention are to provide a method and a system for migrating load in a pool area to improve the flexibility of migrating load in the pool area.

In order to fulfill the foregoing objectives, the present invention puts forwards the technical solution as described hereinafter.

A method for implementing load migration in a pool area, including the following:
after receiving a service request from an MS, a source MSC notifies the MS to initiate location update again, and sends a destination MSC information to the MS, where the destination MSC information is adapted for migration of the MS.

A system for implementing load migration in a pool area, including: an MS, a source MSC and a destination MSC, wherein:
the source MSC is adapted to notify an MS to initiate location update again after receiving the service request from the MS, and send the destination MSC information to the MS; and
the MS is adapted to initiate location update again after receiving the notification from the source MSC, and migrate to the destination MSC corresponding to the destination MSC information.

An MSC, including: a request receiving unit and a notification sending unit, wherein:
the request receiving unit is adapted to receive a service request from the MS to be migrated, and forward the received service request to the notification sending unit; and
the notification sending unit is adapted to notify the MS to initiate location update again after receiving the service request forwarded by the request receiving unit, and send the destination MSC information to the MS.

Therefore, in the load migration process in the present invention, a source MSC sends a destination MSC information to an MS while notifying the MS to initiate location update again. In this way, upon receiving the notification of initiating location update again, the MS may migrate to the destination MSC corresponding to the destination MSC information directly. Therefore, the load migration is implemented flexibly in the pool area, and the users on an MSC in an MSC pool can be migrated to the specified MSC without changing the RAN in the existing network, thus reducing the work of operation and maintenance and improving the satisfaction of the operator.

### BRIEF DESCRIPTION OF THE DRAWINGS

Figure 1 shows a flowchart of a method for implementing load migration in the prior art;

Figure 2 shows a structure of a system for implementing load migration in a pool area according to an embodiment of the present invention;

Figure 3 is a flowchart of a method for implementing load migration according to an embodiment of the present invention; and

Figure 4 shows a structure of an MSC according to an embodiment of the present invention.

### DETAILED DESCRIPTION

In order to make the technical solution, objectives and merits of the present invention clearer, the present invention is hereinafter described in detail with reference to accompanying drawings and preferred embodiments.

As described above, when an MSC in an MSC pool needs to unload traffic due to upgrade or for other reasons, the users on the MSC may be migrated to other MSCs in the pool area in the load sharing mode. However, the prior art does not specify how to migrate the users on an MSC to a specified MSC, and the load migration mode in the prior art is not flexible. The present invention puts forward a solution to migrating users on an MSC in the MSC pool to a specified MSC.

The basic conception of the present invention is:
after receiving a service request from an MS, a source MSC notifies the MS to initiate location update again, and sends a destination MSC information to the MS;
after receiving the notification, the MS initiates location update again, and migrates the traffic to the destination MSC corresponding to the destination MSC information.

The source MSC refers to the MSC which needs to unload users in the MSC pool. The destination MSC refers to the specified destination of migrating the users.

As shown in Figure 2, a system for implementing load migration in a pool area according to an embodiment of the present invention includes an MS, a source MSC and a destination MSC, wherein:
the source MSC is adapted to notify an MS to initiate location update again after receiving a service request from the MS, and send a destination MSC information to the MS.
the MS is adapted to initiate location update again after receiving the notification from the source MSC, and migrate to the destination MSC corresponding to the destination MSC information.

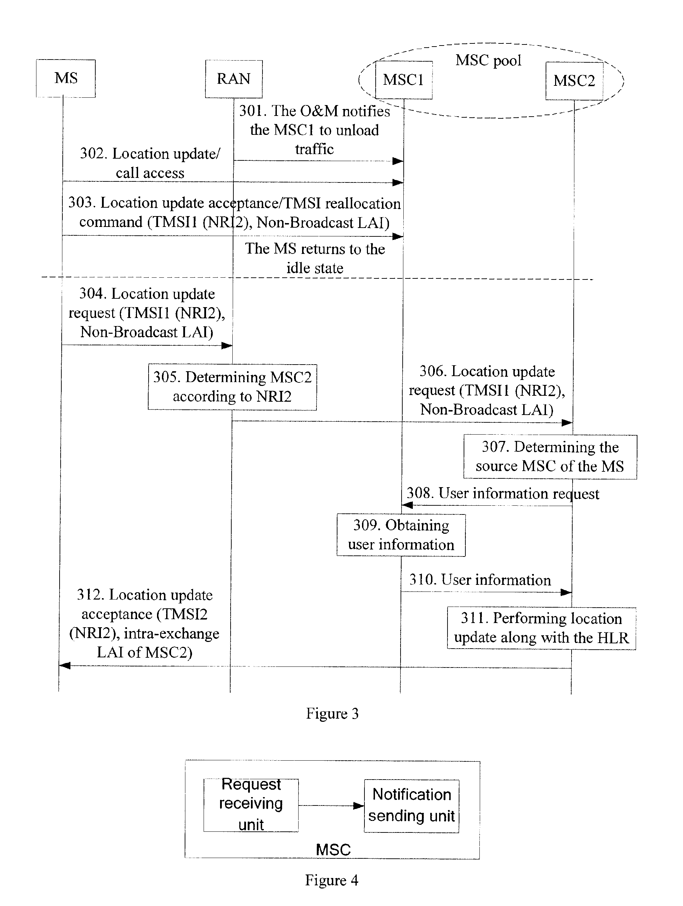

Supposing that the source MSC is MSC1 and the destination MSC is MSC2, the method provided in an embodiment of the present invention is detailed below with reference to the system illustrated in Figure 2. As shown in Figure 3, the process of implementing load migration in an embodiment of the present invention includes the following steps:

Step 301: When some users or specified users on the MSC1 need to be migrated to a specified MSC such as MSC2, the O&M system notifies the MSC1 to unload the users, and notifies the MSC1 of the information about the destination MSC to be migrated, the quantity of users to be migrated, and the users to be migrated, etc.. For example, the O&M system sends to the MSC1 an MSC2 identifier and an International Mobile Subscriber Identity (IMSI) number segment of the users to be migrated.

Step 302: An MS sends a service request (e.g., a location update request or a call access request) to the MSC1.

It should be noted that the process is intended for the MS compliant with the migration conditions, namely, the specified users that need to be migrated to the specified MSC mentioned in step 301. The MSC1 may judge whether the MS needs to be migrated to the specified MSC according to the IMSI number segment of the MS.

Step 303: After receiving the service request sent by the MS, the MSC1 reallocates a TMSI to the MS. The TMSI carries the NRI corresponding to the MSC2. Afterward, the MSC1 sends the TMSI and the intra-exchange non-broadcast LAI of the MSC1 to the MS.

The MSC1 may obtain the NRI corresponding to the MSC2 according to the MSC2 identifier. For easier identification in this embodiment, the NRI corresponding to the MSC1 is called "NRI1", and the NRI corresponding to MSC2 is called "NRI2".

For convenience of subsequent steps, in step 303, the MSC1 retains the corresponding relation between the TMSI reallocated for the MS and the original TMSI of the MS. For ease of description, the TMSI reallocated by the MSC1 to the MS is called "TMSI1", and the original TMSI of the MS is called "TMSI0".

If the MS initiates location update, the MSC1 sends a location update acceptance message carrying the TMSI1 and the non-broadcast LAI to the MS.

If the MS initiates call access, the MSC1 performs the TMSI reallocation process, and sends a TMSI reallocation command carrying the TMSI1 and the non-broadcast LAI to the MS.

Step 304: When the MS detects that the LAI in the system information broadcast is different from the received non-broadcast LAI in the idle state, the MS initiates location update again, and sends a location update request that carries a TMSI1 and a non-broadcast LAI to the RAN.

Step 305: After receiving the location update request from the MS, the RAN exports NRI2 from the TMSI1 carried in the request, and determines that the destination MSC of the location update request is MSC2 according to the NRI2 because an NRI uniquely corresponds to an MSC in an MSC pool.

Step 306: After determining the destination MSC (i.e., MSC2), the RAN sends the received location update request to the MSC2.

Step 307: After receiving the location update request from the RAN, the MSC2 knows, according to the non-broadcast LAI carried in the request, that the MS is a migrated user in the pool rather than an intra-exchange user. Moreover, because a non-broadcast LAI corresponds to an MSC uniquely, the MSC2 can determine the source MSC of the MS (i.e., MSC1) according to the non-broadcast LAI.

Step 308: After determining the source MSC of the MS (i.e., MSC1), the MSC2 sends user information request carrying a TMSI1 to the MSC1 in order to obtain the user information (e.g., IMSI) of the MS.

Besides, the MSC2 may also put the non-broadcast LAI of the MSC1 into the user information request.

Step 309: After receiving the user information request carrying a TMSI1 from the MSC2, the MSC1 knows that the TMSI1 is allocated by the MSC1 according to the TMSI1 and the stored corresponding relation between the TMSI1 and the TMSIO, where the original TMSI of the MS is TMSI0. Afterward, the MSC1 obtains the user information of the MS from the Visitor Location Register (VLR) according to the TMSIO, and deletes the stored corresponding relation between the TMSI1 and the TMSI0 of the MS.

Step 310: The MSC1 sends the obtained user information to the MSC2.

Step 311: After receiving the user information from MSC1, the MSC2 performs location update along with HLR according to the user information.

Step 312: The MSC2 reallocates a TMSI for the MS. For ease of description, the TMSI reallocated by the MSC2 is called "TMSI2" herein. Afterward, the MSC2 sends back to the MS a location update acceptance message that carries TMSI2 and the intra-exchange LAI of the MSC2. The TMSI2 carries the intra-exchange NRI (i.e., NRI2) of the MSC2.

It should be noted that, in step 303, the MSC1 may choose not to retain the corresponding relation between TMSI1 and TMSIO, but steps 308, 309, 310 and 311 are modified as follows:

Step 308: After determining that the source MSC of the MS is MSCs1, the MSC2 substitutes the NRI1 corresponding to the MSC1 for the NRI2 in the TMSI1, thus generating a new TMSI, called "TMSI3". The corresponding relation between the TMSI3 and the TMSI1 is retained. Afterward, the MSC2 sends to the MSC1 a user information request that carries TMSI3.

Step 309: After receiving the user information request carrying TMSI3 from MSC2, the MSC1 obtains the user information of the MS from the VLR according to the TMSI3.

Step 310: The MSC1 sends the obtained user information to the MSC2, and sends the TMSI3 carried in the received user information request to the MSC2.

Step 311: After receiving the user information and the TMSI3 from the MSC1, the MSC2 determines that the TMSI carried in the location update request is TMSI1 according to the corresponding relation between TMSI3 and TMSI1 retained in step 308, namely, determines which MS needs to update location. Afterward, the destination MSC performs location update along with HLR according to the determined TMSI1 and the received user information.

The remaining steps are consistent with those in Figure 3, and are not repeated herein any further.

An MSC is further provided in an embodiment of the invention. As shown in Figure 4, the MSC includes a request receiving unit and a notification sending unit, wherein:
the request receiving unit is adapted to receive a service request from an MS to be migrated, and forward the received service request to the notification sending unit; and
the notification sending unit is adapted to notify the MS to initiate location update again after receiving the service request forwarded by the request receiving unit from the MS to be migrated, and send the destination MSC information to the MS.

The destination MSC information may be information that uniquely identifies the destination MSC, for example, an NRI.

When the service request sent by the MS that meets the migration conditions is a location update request, the notification sending unit reallocates a TMSI for the MS. The reallocated TMSI carries the NRI corresponding to the destination MSC. Afterward, the notification sending unit puts the reallocated TMSI and the non-broadcast LAI into a location update acceptance message and sends the message to the MS, thus notifying the MS to initiate location update again.

If the service request sent by the MS that meets the migration conditions is a call access request, the notification sending unit sends back to the MS a TMSI reallocation command that carries the reallocated TMSI and the non-broadcast LAI.

Elaborated above are the objective, technical solution and benefits of the present invention. It is understandable that although the invention has been described through some exemplary embodiments, the invention is not limited to such embodiments. It is apparent that those skilled in the art can make various modifications and variations to the invention without departing from the spirit and scope of the invention, and such modifications and variations are covered in the protection scope of the invention.

## Claims

1. A method for implementing load migration in a pool area, comprising:
notifying, by a source Mobile Switching Center, MSC, after receiving a service request from a Mobile Station , MS, the MS to initiate location update again, and sending a destination MSC information to the MS, wherein the destination MSC information is adapted for migration of the MS.

2. The method according to claim 1, wherein, the notifying the MS to initiate location update again, and sending a destination MSC information to the MS comprises:
reallocating, by the source MSC, a Temporary Mobile Subscriber Identity, TMSI, to the MS, and sending the reallocated TMSI and the intra-exchange non-broadcast Location Area Identifier to the MS through the response of service request, wherein, the reallocated TMSI comprises the information of the destination MSC.

3. The method according to claim 2, wherein,
if the service request is a location update request, the response of service request is a acceptance of location update; or
if the service request is a call access request, the response of service request is a reallocated TMSI command.

4. The method according to claim 2, wherein, the migration process of the MS comprises:
sending, by the MS, a location update request that carries the TMSI to the Radio Access Network, RAN, after detecting that the Location Area Identifier, LAI, in the system information broadcast is different from the received non-broadcast LAI in the idle state;
sending, by the RAN, the received location update request to the destination MSC which corresponds to the destination MSC information carried in the TMSI; and
obtaining, by the destination MSC, the user information of the MS and performing location update along with HLR, according to the obtained user information.

5. The method according to claim 4, wherein, the obtaining the user information of the MS comprises:
sending, by the destination MSC, a user information request of obtaining the user information of the MS, to the source MSC; and
obtaining, by the source MSC, the user information of the MS from a Visitor Location Register, VLR after receiving the user information request from the destination MSC, and sending the obtained user information to the destination MSC.

6. The method according to claim 5, wherein,
the method further comprises: retaining, by the source MSC, the corresponding relation between the TMSI reallocated for the MS and the original TMSI of the MS, after reallocating a TMSI to the MS;
the TMSI reallocated by the source MSC for the MS is carried in the user information; and
the obtaining, by the source MSC, the user information of the MS from a VLR comprises:
confirming, by the source MSC, according to the TMSI carried in the user information request and the corresponding relation, that the TMSI carried in the user information request is allocated by the destination MSC itself;
obtaining, from the VLR and according to the TMSI carried in the user information, the user information of the MS; and
deleting the corresponding relation.

7. The method according to claim 5, wherein, the sending, by the destination MSC, the user information request of obtaining the user information of the MS to the source MSC comprises:
generating, by the destination MSC, a new TMSI through substituting the NRI, corresponding to the source MSC for the NRI in the TMSI carried in the location update request, sending the user information request carrying the new TMSI to the source MSC, and retaining the corresponding relation between the new TMSI and the TMSI carried in the location update request;
the obtaining, from VLR, the user information of the MS comprises: obtaining, by the source MSC, the user information of the MS from the VLR according to the TMSI carrying in the user information request; and,
after the destination MSC obtains the user information of the MS, the method further comprises: deleting, by the destination MSC, the corresponding relation.

8. The method according to any one of claim 1 to 7, wherein, the destination MSC information is the Network Resource Indicator, NRI, of the destination MSC.

9. A system for implementing load migration in a pool area, comprising: an MS, a source MSC and a destination MSC, wherein:
the source MSC is adapted to notify an MS to initiate location update again, after receiving the service request from the MS, and send the destination MSC information to the MS; and
the MS is adapted to initiate location update again after receiving the notification from the source MSC, and migrate to the destination MSC corresponding to the destination MSC information.

10. The system according to claim 9, further comprising: a Radio Access Network, RAN, wherein,
the MS is adapted to send a location update request carrying the destination MSC information to the RAN after receiving the notification of the source MSC;
the RAN is adapted to send the received location update request from the MS to the destination MSC, to which the destination MSC information corresponds; and
the destination MSC is adapted to perform location update along with the, HLR after receiving the location update request, and reallocate new TMSI for the MS, return the location update acceptance message carrying the reallocated TMSI and the destination MSC LAI to the MS, wherein the reallocated TMSI comprises the destination MSC NRI.

11. The system according to claim 10, wherein, the destination MSC is adapted to obtain the user information of the MS from the source MS and perform the location update along with HLR according to the user information of the MS.

12. An MSC, comprising: a request receiving unit and a notification sending unit, wherein:
the request receiving unit is adapted to receive a service request from the MS to be migrated, and forward the received service request to the notification sending unit; and
the notification sending unit is adapted to notify the MS to initiate location update again after receiving the service request forwarded by the request receiving unit, and send the destination MSC information to the MS.
